# EUROPÄISCHE PATENTSCHRIFT

(11) **EP 1 062 071 B1**
(45) Veröffentlichungstag und Bekanntmachung des Hinweises auf die Patenterteilung: **07.05.2003**
(21) Anmeldenummer: 00906188.8
(22) Anmeldetag: 10.01.2000
(51) Int. Cl.: B23Q 11/08, B27C 5/04, B23Q 3/00

(54) **SCHUTZHAUBE FÜR HOLZFRÄSMASCHINEN**
PROTECTIVE HOOD FOR WOOD MILLING MACHINES
CAPOT DE PROTECTION POUR FRAISEUSES A BOIS

(30) Priorität: 08.01.1999 DE 19900430
(43) Veröffentlichungstag der Anmeldung: 27.12.2000
(73) Patentinhaber: AIGNER, Georg, D-94419 Reisbach (DE)
(72) Erfinder: AIGNER, Georg, D-94419 Reisbach (DE)
(74) Vertreter: Gustorf, Gerhard, Dipl.-Ing.
(86) Internationale Anmeldenummer: EP0000109
(87) Internationale Veröffentlichungsnummer: WO00040365

(56) Entgegenhaltungen:
- DE-A- 3 903 906
- DE-A- 3 943 595
- DE-U- 6 927 153
- US-A- 5 381 842

## Beschreibung

Die Erfindung betrifft eine Schutzhaube für Holzfräsmaschinen nach dem Oberbegriff des Patentanspruchs 1.

Eine derartige Schutzhaube ist Gegenstand der EP-B 558 692. Diese dient zum Bearbeiten bogenförmiger Werkstücke, wobei als Führungselement ein Bogenfräsanschlag oder ein Anlaufring in Kombination mit einer Anlaufleiste eingesetzt werden kann. Wenn die Bearbeitung geradliniger Werkstücke am Anschlag durchgeführt werden soll, beispielsweise mit Hilfe von zueinander verstellbaren Anschlagplatten eines "Integralanschlages" gemäß EP-B 215 040, ist es erforderlich, die Schutzhaube für das Bogenfräsen abzubauen und eine Schutzhaube auf dem Maschinentisch zu montieren, an der die Anschlagplatten angebracht werden können. Diese Umrüstarbeiten sind nicht nur zeitaufwendig, sondern erfordern wegen des großen Gewichtes der zu bewegenden Vorrichtungen meist auch zwei Personen oder entsprechende Hub- und Schwenkorgane.

Der Erfindung liegt die Aufgabe zugrunde, eine Schutzhaube für Holzfräsmaschinen zur Verfügung zu stellen, die so gestaltet ist, daß sie als universell einsetzbares Grundelement auf dem Maschinentisch verbleiben kann und sowohl für den Anbau von Anschlagplatten als auch für Bogenfräsarbeiten verwendet werden kann.

Bei einer Schutzhaube der im Oberbegriff des Patentanspruchs 1 umrissenen Gattung wird diese Aufgabe dadurch gelöst, daß an jeder der beiden Seitenwände der Schutzhaube ein Halteorgan für die abnehmbare Befestigung einer Anschlagplatte angebracht ist, das aus einem an der Seitenwand lösbar befestigten Seitenschenkel und einem rechtwinklig dazu ausgerichteten, die Anschlagplatte tragenden Vorderschenkel besteht. Der Begriff lösbar umfaßt nicht nur die bevorzugte Möglichkeit, die Halteorgane bei Bedarf vollständig abzunehmen, sondern auch die Alternative, diese beispielsweise nach hinten wegzuschwenken oder nach oben zu verschieben, um zum Fräsen ring- oder bogenförmiger Werkstücke ausreichend Platz im unteren Bereich der Schutzhaube zur Verfügung zu stellen. Um vom Fräsen am Anschlag auf das Bogenfräsen übergehen zu können, genügt es in jedem Fall, die beiden Halteorgane mit den Anschlagplatten im Sinne der Erfindung zu lösen, so daß die bogenförmige Bearbeitung von Holzwerkstücken ohne Einschränkung möglich ist.

Dabei ist es vorteilhaft, wenn der Seitenschenkel relativ zu der Seitenwand der Schutzhaube horizontal verstellbar ist, deren beide Seitenwände horizontal verschiebbar in zwei parallele Führungsschienen eingreifen, die auf dem Maschinentisch befestigt sind. Jede der beiden Seitenwände der Schutzhaube kann auf diese Weise über ein Klemmorgan an der Führungsschiene verstellbar befestigt werden.

Nach weiteren Merkmalen der Erfindung ist es möglich, entweder die gesamte, aus Schutzhaube und Anschlagplatten bestehende Einheit über einen Stellmechanismus nach vorn oder hinten zu verstellen oder nur eine der beiden Anschlagplatten an der Schutzhaube relativ zu der anderen Anschlagplatte einzustellen. Der Stellmechanismus kann dabei entweder an der Schutzhaube oder an dem Halteorgan vorgesehen sein.

Die Stellmechanismen können manuell zu betätigende Einstellspindeln haben und in kastenförmigen Gehäusen angeordnet sein, welche die Seitenschenkel der beiden Halteorgane bilden. In einem der beiden Halteorgane ist der Stellmechanismus so ausgebildet, daß er zur Horizontalverschiebung der gesamten, aus dem Grundgerät (Schutzhaube) und den beiden angebauten Anschlagplatten bestehenden Einheit dient, während die Stellvorrichtung im anderen Halteorgan zur Relativverstellung zwischen diesem und der Schutzhaube vorgesehen ist.

In einer alternativen Ausführungsform sind die beiden Stellmechanismen in den hohlen Seitenwänden der Schutzhaube untergebracht und werden synchron von zwei Elektromotoren angetrieben, welche die Schutzhaube und die ggf. angebauten Anschlagplatten gemeinsam horizontal verschieben. Durch synchrone Ansteuerung der beiden Elektromotoren läßt sich eine leichtgängige, verkantungsfreie Bewegung der Schutzhaube realisieren, wobei zusätzlich die Möglichkeit besteht, durch entsprechende Steuerungsprogrammierung die gewünschten Parameter über eine Tastatur einzugeben. Die Relativverschiebung zwischen einer der beiden Anschlagplatten und der Schutzhaube wird bei dieser Lösung vorzugsweise durch einen weiteren Elektromotor vorgenommen, der in dem Seitenschenkel des entsprechenden Halteorgans untergebracht ist.

In Weiterbildung dieser Ausführungsform ist es besonders vorteilhaft, zum Festklemmen der Schutzhaube auf den Führungsschienen in beiden Seitenwänden einen Motor vorzusehen, der eine vertikale Spindel antreibt, die als Klemmorgan dient. Es ist auf diese Weise möglich, an der Tastatur die gewünschten Werte einzugeben, so daß nicht nur die Verstellung der Schutzhaube und der Anschlagplatte automatisch durchgeführt wird, sondern auch die Fixierung der Schutzhaube in der erreichten Arbeitsposition.

Nach einem anderen Merkmal der Erfindung besteht der Deckel aus einer mit der Rückwand verbundenen, festen Abstützfläche, an der über ein Scharnier ein vorzugsweise transparenter Klappdeckel angelenkt ist, der eine ausziehbare Verlängerungsplatte mit einem nach unten abstehenden Rand trägt, an dessen Vorderseite das Schutzschild höhenverstellbar angebracht ist. Durch Hochschwenken des Klappdeckels wird somit ein ungehinderter Zugang in das Innere der Schutzhaube geschaffen, um etwa das Fräswerkzeug auszuwechseln.

Nach einem weiteren Merkmal der Erfindung hat die Abstützfläche Mittel zur Befestigung eines Lagerbocks für den Schwenkarm einer Schutz- und Druckvorrichtung, beispielsweise gemäß EP-B 637 276.

Weitere Merkmale und Vorteile der Erfindung ergeben sich aus den Patentansprüchen und aus der folgenden Beschreibung von zwei Ausführungsbeispielen, die in der Zeichnung dargestellt sind.

Es zeigen:
- Figur 1: eine Vorderansicht der Schutzhaube mit angebauten Anschlagplatten und an der Abstützfläche des Deckels befestigter Schutz- und Druckvorrichtung nach einem ersten Ausführungsbeispiel,
- Figur 2: eine Rückansicht der Einheit gemäß Figur 1,
- Figur 3: eine Seitenansicht der Einheit der Figuren 1 und 2 mit hochgeschwenktem Klappdeckel und hochgeklappter Schutz- und Druckvorrichtung,
- Figur 4: eine der Figur 2 entsprechende Darstellung nach Abnahme der beiden Halteorgane mit den Anschlagplatten,
- Figur 5: eine Vorderansicht der Einheit der Figur 4 bei hochgeklappter Schutz- und Druckvorrichtung und von den Halteorganen abgenommenen Anschlagplatten,
- Figur 6: die Schutzhaube in ihrer Stellung für das Bogenfräsen bei hochgeklappter Schutz- und Druckvorrichtung,
- Figur 7: eine Unteransicht der Schutzhaube beim Aufsetzen auf die beiden Führungsschienen,
- Figur 8: eine im unteren Bereich aufgeschnittene Darstellung der rechten Seitenwand der Schutzhaube,
- Figur 9: die von unten dargestellte, linke Seite der Schutzhaube,
- Figur 10: eine Schrägansicht der Schutzhaube in ihrer Stellung zum Bogenfräsen mit Hilfe eines Anlaufringes,
- Figur 11: die Schutzhaube der Figur 10 bei hochgeschwenktem Klappdeckel,
- Figur 12: eine Teildarstellung der rechten Seitenwand der Schutzhaube im Augenblick des Anhebens des Klappdeckels,
- Figur 13: die Einzelheit XIII der Figur 12,
- Figur 14: die Unteransicht der Schutzhaube mit angebauten Anschlagplatten,
- Figur 15: in vergrößertem Maßstab die teilweise aufgeschnittene Darstellung des linken Halteorgans mit Winkelgetriebe für die Verstellung der gesamten Einheit,
- Figur 16: eine der Figur 15 ähnliche Darstellung des geöffneten rechten Halteorgans,
- Figur 17: eine andere Darstellung des rechten Halteorgans gemäß Figur 16,
- Figur 18: eine der Figur 5 ähnliche Ansicht eines zweiten Ausführungsbeispiels,
- Figur 19: die Schutzhaube der Figur 18 in ihrer Stellung für das Bogenfräsen bei hochgeklappter Schutz- und Druckvorrichtung,
- Figur 20: den unteren Bereich der Schutzhaube der Figuren 18 und 19 mit herausgenommenen Stellmechanismen,
- Figur 21: die vergrößerte Darstellung einer der beiden Stellmechanismus-Einheiten,
- Figur 22: die Stellmechanismus-Einheit der Figur 21 in Explosionsdarstellung,
- Figur 23: eine Variante der Figur 16 zur Darstellung des verstellbaren, rechten Halteorgans mit elektrisch betätigtem Stellmechanismus,
- Figur 24: die Ansicht des Halteorgans der Fiur 23 aus einem anderen Blickwinkel,
- Figur 25: die Schutzhaube (Grundgerät) mit einer aufgebrochenen Seitenwand,
- Figur 26: die Schutzhaube gemäß Figur 25 nach der Abnahme von den Führungsschienen und
- Figur 27: eine Variante der Figur 12.

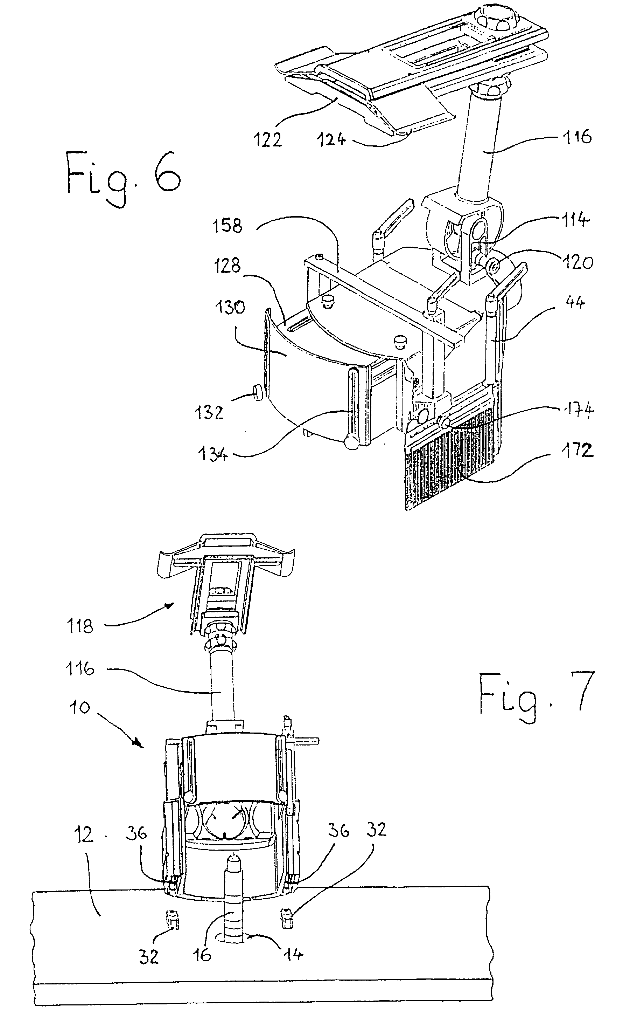

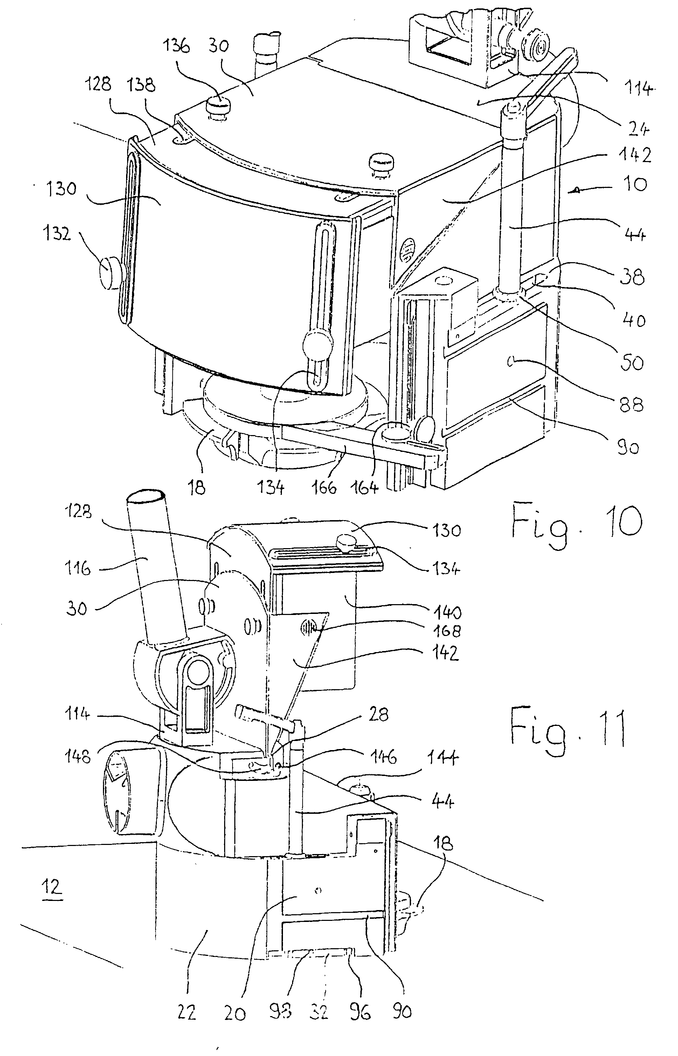

Die Figuren zeigen eine Schutzhaube 10, die auf einem waagrechten Maschinentisch 12 einer Holzfräsmaschine als ständig verfügbares Grundelement befestigt werden kann. In Figur 7 ist der Maschinentisch 12 angedeutet, der eine Bohrung 14 hat, durch die hindurch eine vertikale Spindel 16 greift, deren Rotationsantrieb nicht gezeigt ist. Auf der Spindel 12 wird ein in den Figuren 10 und 11 gezeigtes Fräswerkzeug 18 befestigt, das beim Bearbeiten von Holzwerkstücken von der Schutzhaube 10 weitestgehend abgedeckt wird.

Die Schutzhaube 10 besteht aus einem kastenförmigen, zum Maschinentisch 12 hin offenen Gehäuse mit zwei zueinander parallelen Seitenwänden 20, die durch eine bogenförmige Rückwand 22 und eine waagrechte Abstützfläche 24 miteinander verbunden sind. Die ebene Abstützfläche 24 bildet den hinteren Teil eines Deckels 26, an dem über zwei seitliche Scharniere 28 ein Klappdeckel 30 angelenkt ist.

In den Figuren 7 bis 9 ist zu erkennen, daß auf dem Maschinentisch 12 zwei Führungsschienen 32 mit jeweils zwei Schrauben 34 parallel zueinander befestigt sind. Ihr gegenseitiger Abstand ist dabei so gewählt, daß die Schutzhaube 10 so auf die beiden Führungsschienen 32 aufgesetzt werden kann, daß diese in längliche Aussparungen 36 eingreifen, deren Breite der Breite der Führungsschienen 32 entspricht und die in die Unterseite der beiden Seitenwände 20 der Schutzhaube 10 eingearbeitet sind.

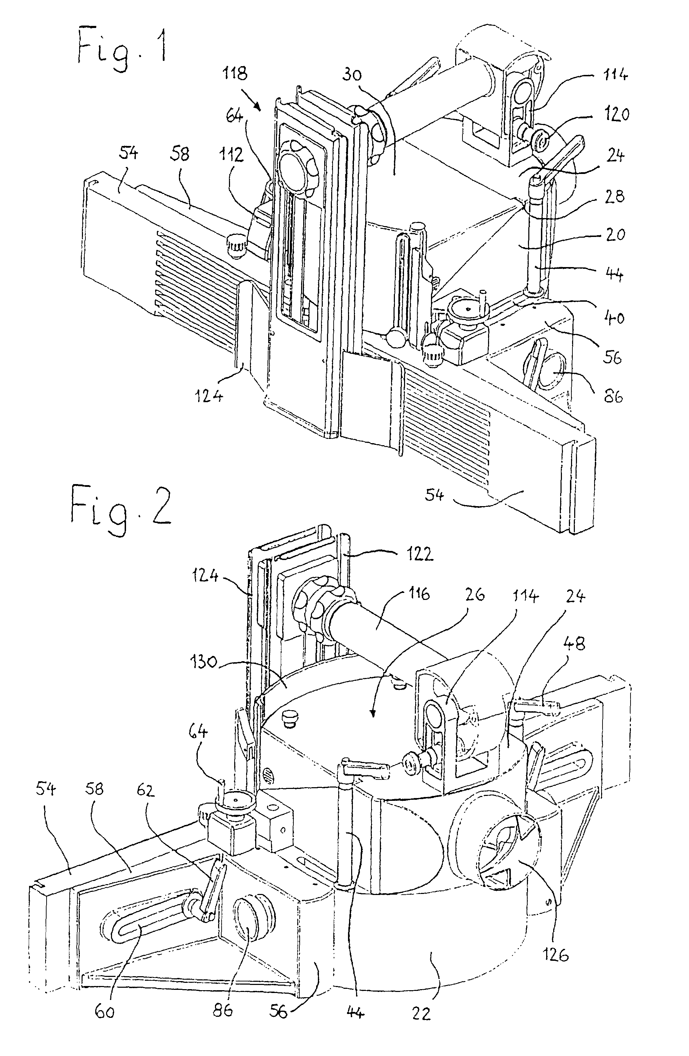

Beim Ausführungsbeispiel der Figuren 1 bis 17 hat jede Seitenwand 20 im unteren Bereich eine nach außen vorstehende Stufe 38, in die ein vertikaler Längsschlitz 40 eingearbeitet ist. Durch diesen ist das Gewindeende 42 einer Klemmschraube 44 gesteckt und in eine Gewindebohrung 46 der Führungsschiene 32 eingeschraubt. Die Klemmschraube 44 hat an ihrem oberen Ende einen Klemmhebel 48, der über dem Deckel 26 liegt, während sie sich in ihrem mittleren Bereich über einen Bund 50 auf der Oberseite der Stufe 38 abstützt. Nach Lösen der Klemmschraube 44 kann die Schutzhaube 10 auf den beiden Führungsschienen 32 nach vorn und hinten verschoben werden; wenn die gewünschte Stellung erreicht ist, kann die Schutzhaube 10 anschließend durch die Klemmschraube 44 wieder am Maschinentisch 12 fixiert werden.

Die beiden Seitenwände 22 der Schutzhaube 10 sind im Bereich der Stufen 38 so ausgebildet, daß an ihnen ein Halteorgan 52 für die Aufnahme einer Anschlagplatte 54 lösbar befestigt werden kann. Jedes Halteorgan 52 besteht dabei aus einem an der Seitenwand 20 im Bereich ihrer Stufe 38 fixierbaren Seitenschenkel 56 sowie einem rechtwinklig dazu ausgerichteten Vorderschenkel 58, an welchem die jeweilige Anschlagplatte 54 angebracht werden kann. Hierzu hat der Vorderschenkel 58 einen waagrechten Schlitz 60, durch den hindurch eine Klemmschraube 62 zur horizontal verstellbaren Fixierung der Anschlagplatte 54 greift.

Wie die Figuren 1 bis 5 und 15 bis 17 zeigen, ist auf beiden Seiten der Schutzhaube 10 jeweils ein Stellmechanismus mit einem Stellrad 64 vorgesehen, das im dargestellten Ausführungsbeispiel an jedem der beiden Halteorgane 52 angeordnet ist, und zwar im Bereich des Vorderschenkels 58, so daß es vom Benutzer leicht erreicht und bedient werden kann. Mit Hilfe des einen Stellrades 54 - im Ausführungsbeispiel des am in Figur 1 von vorn gesehen linken Halteorgan 52 angebrachten Stellrades 64 - kann die gesamte Einheit nach vorn und hinten mechanisch verstellt werden, während das andere - im Ausführungsbeispiel rechte - Stellrad 64 zur Verschiebung des rechten Halteorgans 52 relativ zur Schutzhaube 10 dient.

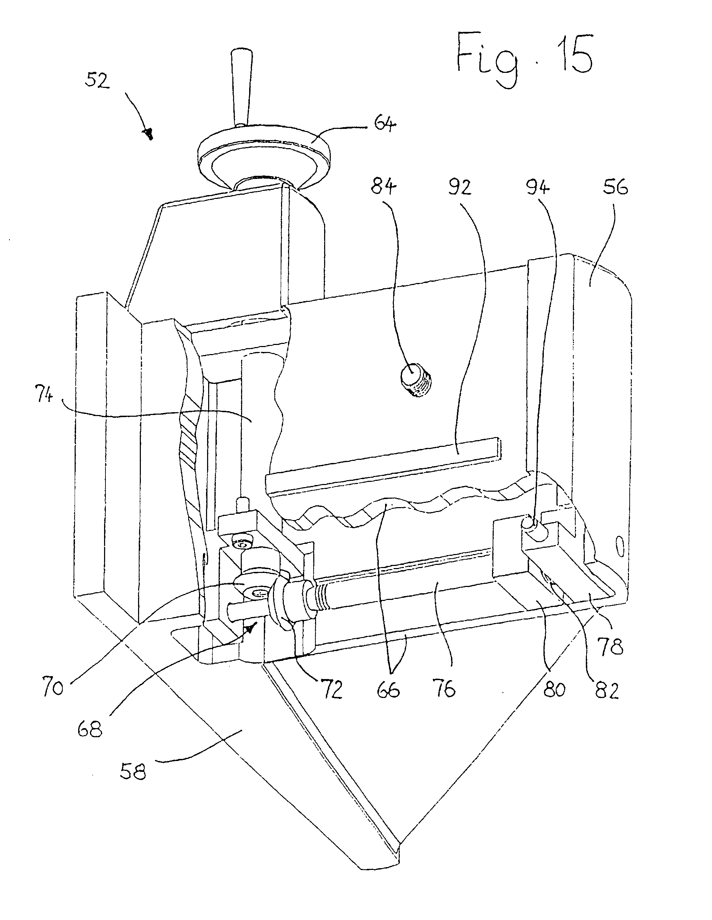

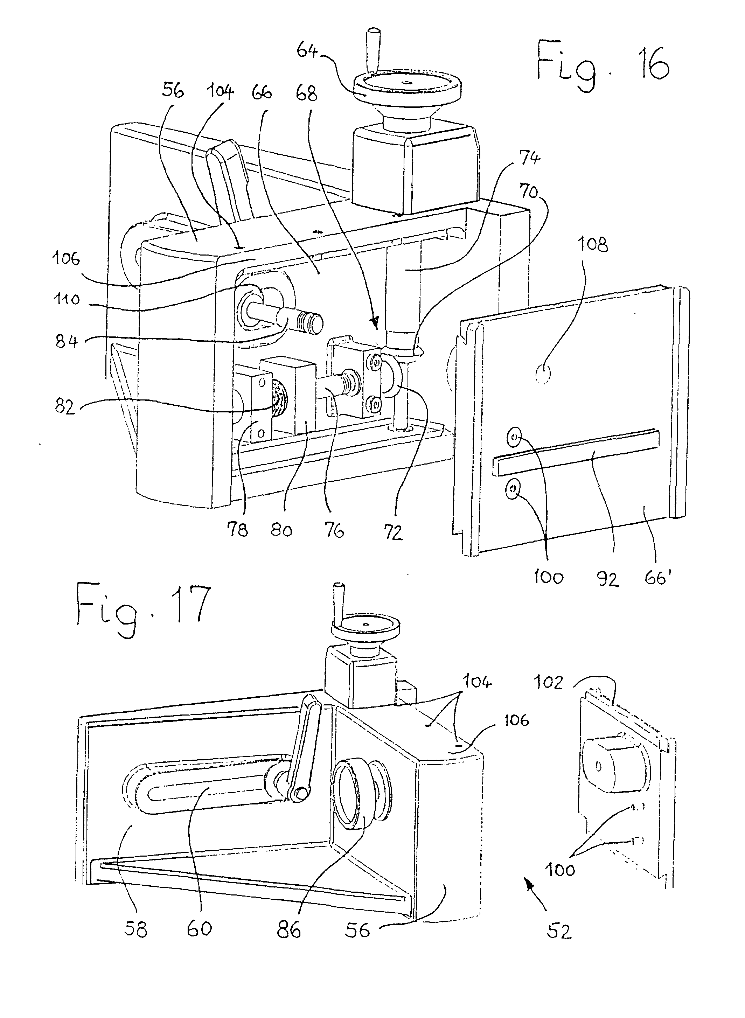

Der Seitenschenkel 56 jedes Halteorgans 52 besteht aus einem kastenförmigen Gehäuse mit zwei parallelen Längswänden 66 (vgl. Figuren 14 bis 16). Dieses Gehäuse nimmt sowohl im Fall des linken Halteorgans 52 gemäß Figur 15 als auch im Fall des rechten Halteorgans gemäß Figur 16 ein Winkelgetriebe 68 auf, das zwei miteinander kämmende Kegelzahnräder 70 und 72 hat. Das Kegelzahnrad 70 ist am unteren Ende einer vertikalen Einstellspindel 74 befestigt, deren oberes Ende das von Hand zu betätigende Stellrad 64 trägt. Das andere Kegelzahnrad 72 ist an einer horizontalen Gewindespindel 76 befestigt, die in dem Gehäuse parallel zu den beiden Längswänden 66 gelagert ist und eine Stellmutter 78 trägt, die bei Drehung der Gewindespindel 76 axial auf dieser verschoben wird. Auf die Gewindespindel 76 ist ferner eine Stützmutter 80 aufgesetzt; zwischen Stützmutter 80 und Stellmutter 78 sind Tellerfedern 82 eingesetzt, die für eine spielfreie Lagerung der Stellmutter 78 auf der Einstellspindel 74 sorgen.

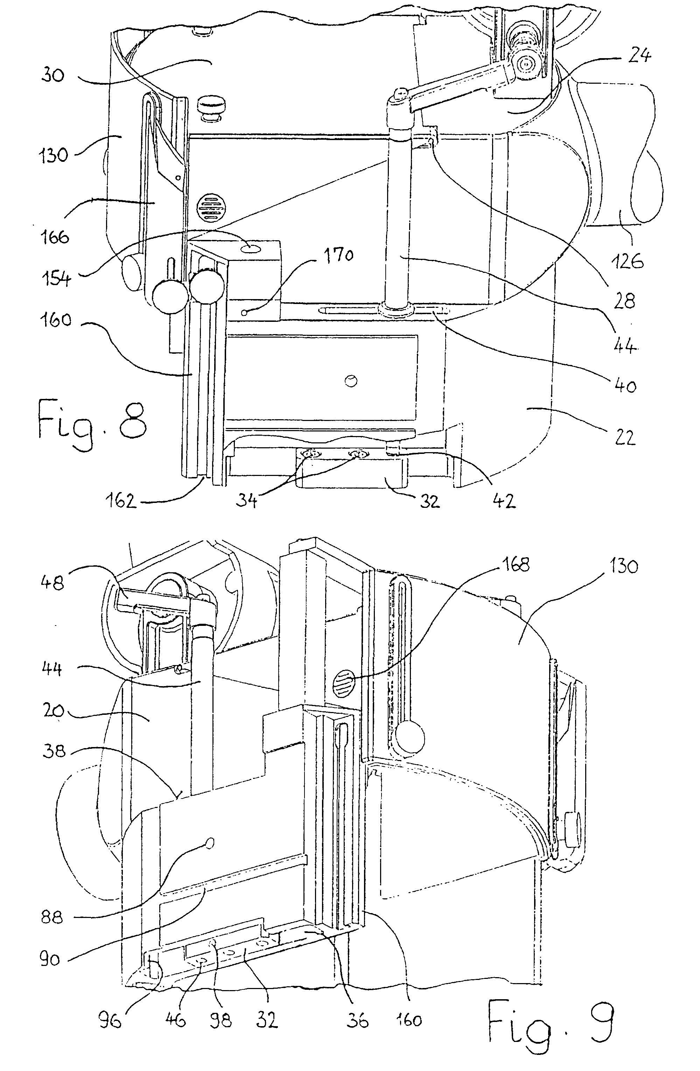

Wie bereits erwähnt, ist das linke Halteorgan 52 (Figur 15) fest an der Schutzhaube 10 angebracht. Hierzu dient eine Durchsteckschraube 84 mit einem leicht bedienbaren Handrad 86, deren Gewindeende in eine Gewindebohrung 88 der anliegenden Seitenwand 20 der Schutzhaube 10 eingreift (vgl. Figur 9). An dieser Seitenwand 20 ist eine Längsnut 90 ausgebildet, in die eine an der gegenüberliegenden Längswand 66 des Halteorgans 52 ausgebildete Leiste 92 eingreift, wodurch eine exakte Positionierung des Halteorgans 52 an der Seitenwand 20 der Schutzhaube 10 gewährleistet wird.

Von der Stellmutter 78 des in Figur 15 gezeigten, linken Halteorgans 52 steht ein Dorn 94 ab, der durch eine längliche Öffnung 96 (s. Figur 9) am unteren Rand der gegenüberliegenden Seitenwand 20 der Schutzhaube 10 in eine Bohrung 98 der zugeordneten Führungsschiene 32 eingreift. Nach Lösen der beiden Klemmschrauben 44 kann auf diese Weise die gesamte Einheit - Schutzhaube 10 mit den beiden Halteorganen 52 und den Anschlagplatten 54 - auf dem Maschinentisch 12 nach vorn oder hinten verstellt werden. Hierzu wird das linke Stellrad 64 verdreht, welches über das Winkelgetriebe 68 eine Relativverstellung der Stellmutter 78 mit ihrem Dorn 94 auf der Gewindespindel 76 erzeugt.

Wie die Figuren 16 und 17 zeigen, hat das kastenförmige Gehäuse des Seitenschenkels 56 des rechten Halteorgans 52 zwei relativ zueinander verschiebbare Längswände 66, 66'. Die an der Seitenwand 20 der Schutzhaube 10 anliegende, äußere Längswand 66' ist mit Hilfe von zwei Schrauben 100 an der Stellmutter 78 des Winkelgetriebes 68 befestigt und auf einer Führungsleiste 102 verschiebbar gelagert, welche mit Hilfe von drei Schrauben 104 an der Innenseite der oberen Wand 106 des kastenförmigen Gehäuses befestigt ist. An der Außenseite der verschiebbaren Längswand 66' ist - ähnlich wie im Falle des linken Halteorgans 52 - eine Leiste 92 ausgebildet, die in eine Längsnut 90 der gegenüberliegenden Seitenwand 20 der Schutzhaube 10 eingreift. Auch hier ist das Halteorgan 52 über eine Durchsteckschraube 84 an der gegenüberliegenden Seitenwand 20 der Schutzhaube 10 befestigt. Das Gewindeende der Durchsteckschraube 64 greift hierbei ebenfalls durch eine Bohrung 108 in der Längswand 66' in eine Gewindebohrung 88 (Figur 10) der gegenüberliegenden Seitenwand 20 der Schutzhaube 10 ein. Das andere Ende der Durchsteckschraube 84, an welchem das Handrad 86 befestigt ist, ist durch ein waagrechtes Langloch 110 der festen Längswand 66 des Halteorgans 52 geführt. Bei einer Verdrehung des Stellrades 64 der Einstellspindel 74 bewegt sich im Fall des rechten Halteorgans 52 dieses über die Führungsleiste 102 auf der Längswand 66', welche an der Seitenwand 20 der Schutzhaube 10 befestigt ist, so daß eine Verstellung des rechten Halteorgans 52 mit angebauter Anschlagplatte 54 relativ zum linken Halteorgan 52 mit Anschlagplatte 54 durchgeführt werden kann.

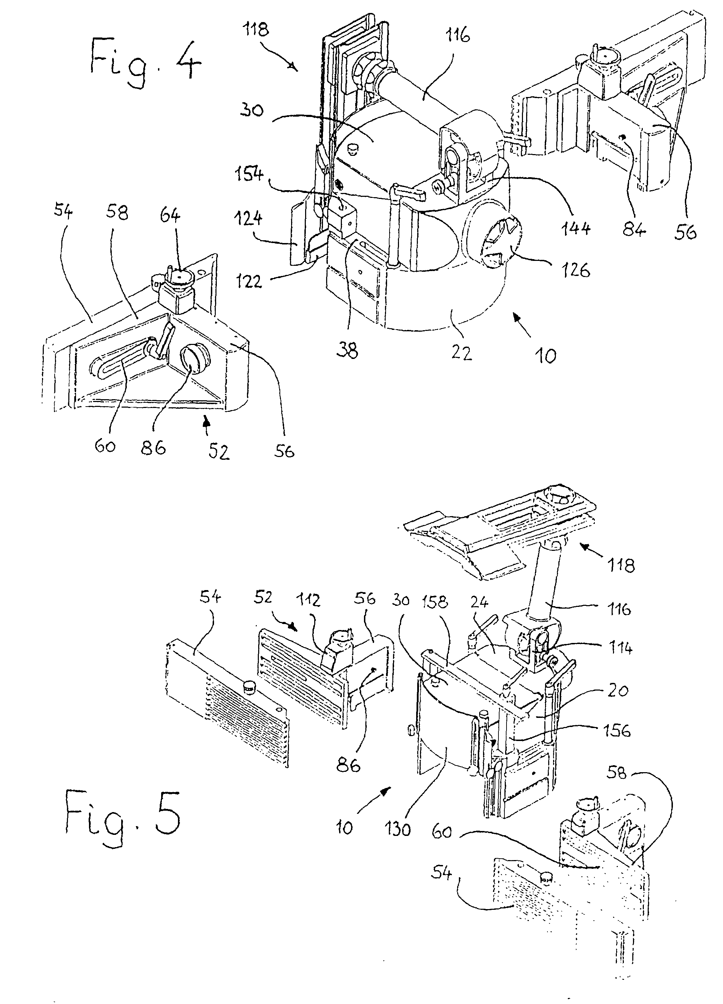

In den Figuren 1 und 5 ist angedeutet, daß dem Stellmechanismus auf der linken Seite der Schutzhaube 10 eine vorzugsweise digitale Maßskala mit optischer Anzeige 112 zugeordnet ist.

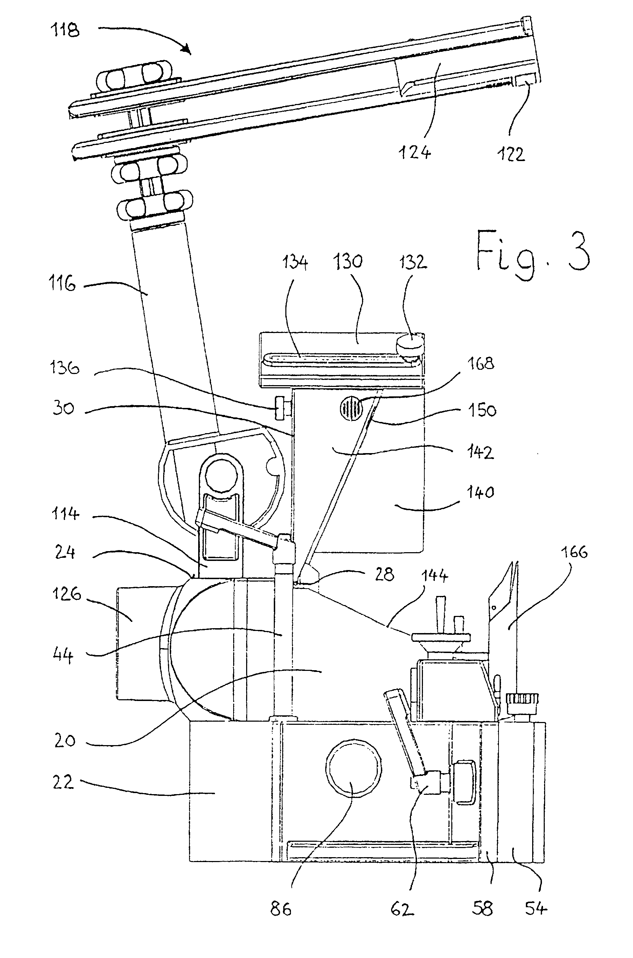

Wie bereits erwähnt, ist der hintere Teil des Deckels 26 als Abstützfläche 24 ausgebildet, auf der ein Lagerbock 114 für den Schwenkarm 116 einer Schutz- und Druckvorrichtung 118 befestigt werden kann, die beispielsweise nach dem europäischen Patent Nr. 637 276 aufgebildet ist. Das vordere Ende des Schwenkarms 116, der über einen Verriegelungsknopf 120 in einer waagrechten Betriebsstellung und einer nach oben geschwenkten Stellung am Lagerblock 114 gehalten werden kann, trägt an seinem vorderen Ende verstellbar einen auf die Oberseite eines Werkstücks wirkenden Druckschuh 122 sowie einen das Werkstück in horizontaler Richtung gegen den Anschlag 54 drückendes Führungsorgan 124. Wenn die Schutzhaube 10 gemäß der Erfindung zum Bogenfräsen verwendet werden soll, bei dem die beiden Halteorgane 52 mit den Anschlagplatten 54 abgenommen sind, wird die Schutz- und Druckvorrichtung 118 in die in den Figuren 3, 5 und 6 gezeigte Wartestellung nach oben geschwenkt.

Im oberen Bereich der Rückwand 22 der Schutzhaube 10 ist ein waagrechter Anschlußstutzen 126 ausgebildet, der mit einer Absaugeinrichtung verbunden werden kann. Der Anschlußstutzen 116 ist hierbei dicht unterhalb der Abstützfläche 24 des Deckels 26 angebracht, so daß über dem Maschinentisch 12 ausreichend Platz für die Durchführung bogenförmiger Werkstücke vorhanden ist.

Der transparente Klappdeckel 30 trägt an seiner Unterseite eine ebenfalls durchsichtige, ausziehbare Verlängerungsplatte 128 mit einem nach unten abstehenden Rand, an dessen Vorderseite ein bogenförmiges, transparentes Schutzschild 130 angebracht ist. Dieses ist mit Hilfe von zwei seitlichen Feststellschrauben 132, welche durch vertikale Längsschlitze 134 des Schutzschildes 130 greifen, höhenverstellbar an der Vorderseite des Randes der Verlängerungsplatte 128 befestigt.

Die Verlängerungsplatte 128 wird an der Unterseite des Klappdeckels 30 durch zwei Klemmschrauben 136 gehalten, welche in zwei parallele Längsschlitze 138 der Verlängerungsplatte 128 eingreifen, so daß diese nach Art einer Schublade in dem Klappdeckel 30 verschoben werden kann. Die Vorderseite des Randes der Verlängerungsplatte 128 geht in zwei zueinander parallele Seitenplatten 140 über, welche zwischen zwei vom Klappdeckel 30 nach unten abstehenden Seitenwänden 142 geführt werden.

Die beiden Seitenwände 142 des Klappdeckels 30 haben eine zu den Scharnieren 28 hin konvergierende Dreiecksform, und die sich anschließenden Seitenwände 20 der Schutzhaube 10 haben einen entsprechend abgeschrägten Rand 144 (vgl. Figuren 10 bis 13). Auf diese Weise ergibt sich in der hochgeschwenkten Stellung des Klappdeckels 30 eine zur Vorderseite der Schutzhaube 10 weit auslaufende Öffnung, die den Zugang in das Innere der Schutzhaube 10 erleichtert. In dieser geöffneten Stellung wird der Klappdeckel 30 durch ein Rastelement 146 verriegelt, welches elastisch in einen Sitz einschnappt, der in einer bogenförmigen Führungsnut 148 an beiden Seitenwänden 20 der Schutzhaube 10 ausgebildet ist.

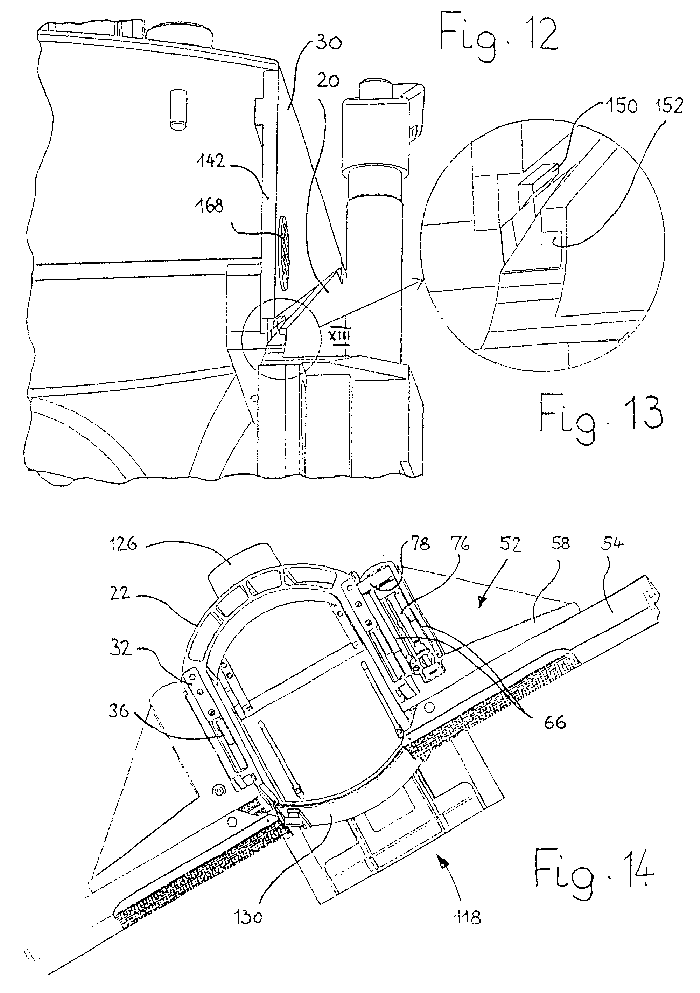

Die Figuren 12 und 13 zeigen, daß der Klappdeckel 30 in seiner waagrechten, geschlossenen Stellung mittels eines Vorsprungs 150 gehalten wird, der in eine Hinterschneidung 152 elastisch einschnappt, welche in die Innenseite der Seitenwand 20 der Schutzhaube 10 eingearbeitet ist. Zum Öffnen des Klappdeckels 30 genügt ein Fingerdruck auf zwei einander gegenüberliegende Punkte 168, wodurch die beiden Seitenwände 142 elastisch federnd nach innen gebogen werden und die Vorsprünge 150 außer Eingriff mit den Hinterschneidungen 152 kommen.

Die Figuren 2 bis 6 zeigen, daß in dem vorderen Bereich der Stufe 38 jeder Seitenwand 20 eine vertikale Haltebohrung 154 eingearbeitet ist, in welche Tragsäulen 156 einer Tragschiene 158 eingesetzt werden können, an welcher nicht weiter dargestellte Druck- oder Führungsorgane befestigt werden können.

In den Figuren 8 bis 10 ist zu erkennen, daß in den seitlich nach außen weisenden Bereich der Vorderkante 160 wenigstens einer der beiden Seitenwände 20 eine Vertikalnut 162 eingearbeitet ist, die zur höhenverstellbaren Aufnahme eines Klemmsteines 164 dient, der eine schwenkbare Anlaufleiste 166 trägt (Figur 10).

In beide Seitenwände 20 der Schutzhaube 10 ist eine Gewindebohrung 170 zur verstellbaren Befestigung eines Staubschutzvorhanges 172 mittels einer Klemmschraube 174 eingearbeitet (Figuren 6 und 8).

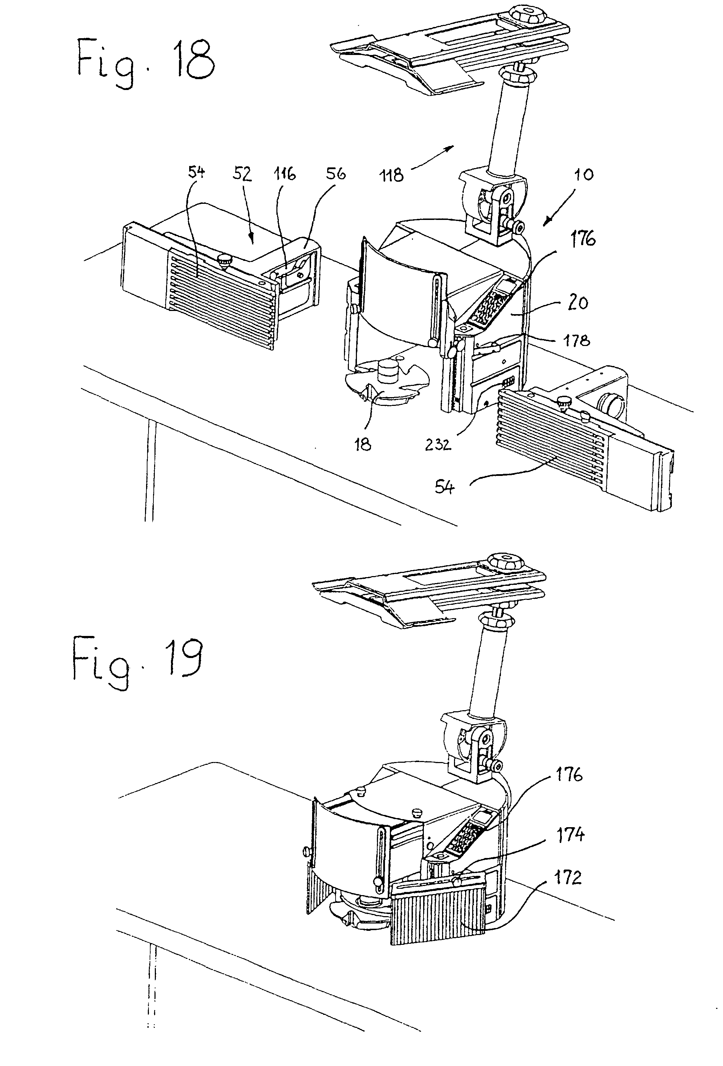

Die Figuren 18 bis 26 zeigen ein zweites Ausführungsbeispiel, das sich von dem zuvor beschriebenen im wesentlichen dadurch unterscheidet, daß die Stellmechanismen über vorzugsweise elektrisch betriebene Motoren angesteuert werden können und nicht in den Seitenschenkeln der Halteorgane 52, sondern in den Seitenwänden 20 der Schutzhaube 10, die als Grundgerät zur Verfügung steht, untergebracht sind.

Figur 18 zeigt diese Variante der Schutzhaube 10 nach der Abnahme der Halteorgane 52 für die beiden Anschlagplatten 54. In den beiden Seitenwänden 20 der Schutzhaube 10 sind die Stellmechanismen untergebracht, die nachstehend noch erläutert und elektrisch angetrieben werden. Zu diesem Zweck ist auf einer Schrägfläche einer der beiden Seitenwände 20 eine Tastatur 176 untergebracht, an der die gewünschten Sollwerte für die Positionierung der Schutzhaube 10 und der Halteorgane 52 eingegeben werden können.

Figur 19 zeigt die Schutzhaube 10 der Figur 18 in ihrer Einsatzstellung für das Bogenfräsen. Dabei ist zu erkennen, daß die beiden Staubschutzvorhänge 172 mittels der Klemmschrauben 174 schräg aufeinander zulaufend an Haltewinkeln 178 befestigt sind, die an den beiden Seitenwänden 20 ausgebildet sind.

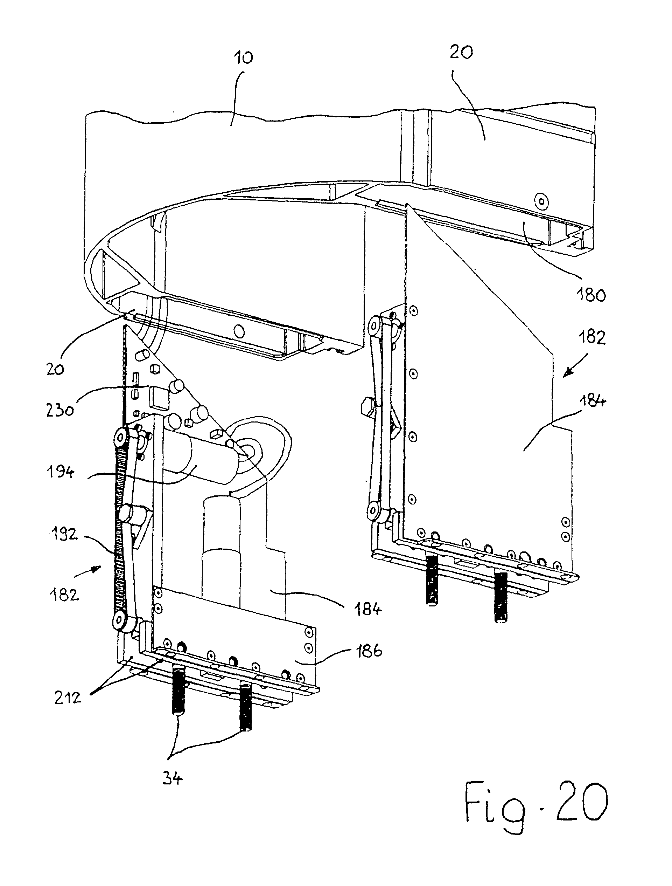

In Figur 20 ist perspektivisch die Unteransicht der Schutzhaube 10 dargestellt, deren Seitenwände 20 einen Hohlraum 180 aufweisen, von denen jeder zur Aufnahme einer Einschub-Einheit 182 dient, die die Stellmechanismen aufnimmt. Jede Einheit 182 besteht aus einer nach außen gerichteten, etwa trapezförmigen Innenwand 184 und einer parallel dazu ausgerichteten, rechteckigen und wesentlich niedrigeren Innenwand 186. Die beiden Innenwände 184 und 186 sind über eine Rückwand 188 und eine Vorderwand 190 miteinander verbunden, zwischen denen die bereits am vorangegangenen Ausführungsbeispiel erläuterte Gewindespindel 76 drehbar gelagert ist. Auf dieser sitzt die Stellmutter 78. Die Gewindespindel 76 wird über einen Zahnriemen 192 von einem Elektromotor 194 angetrieben, der mit waagrecht ausgerichteter Achse an der Rückwand 188 befestigt ist.

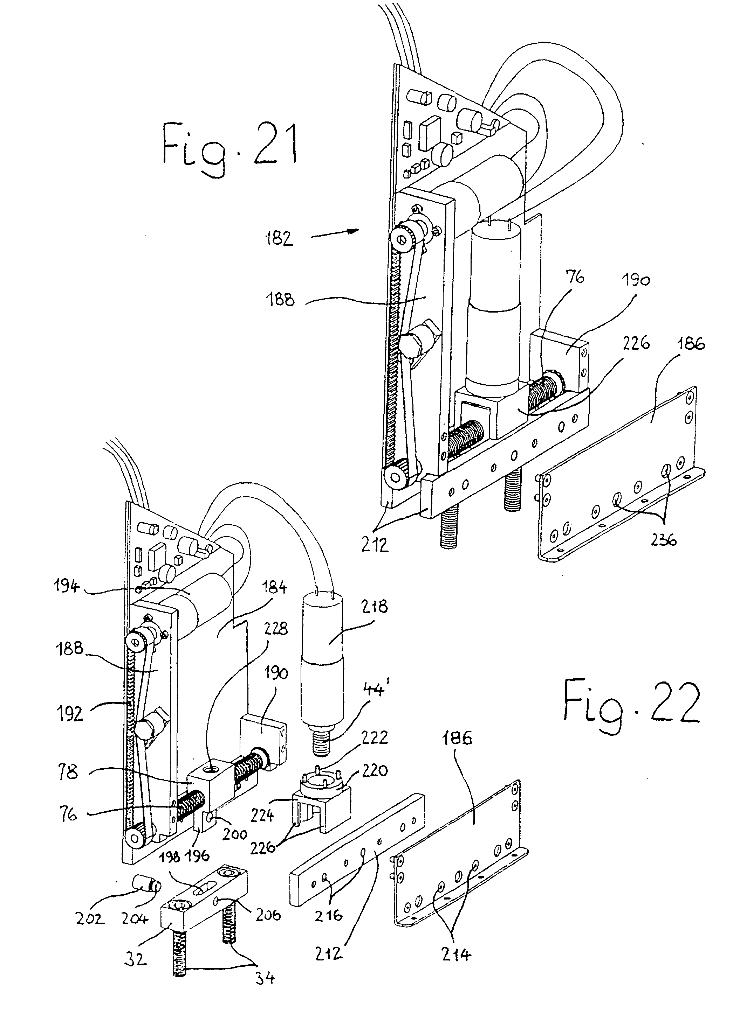

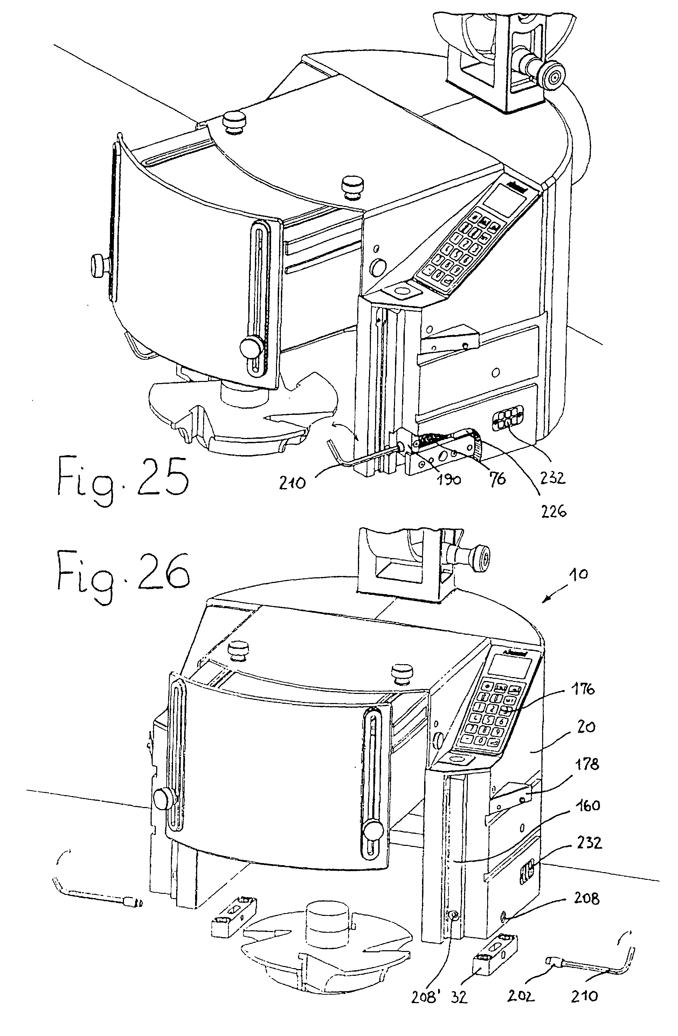

Wie Figur 22 zeigt, steht von der Stellmutter 78 ein Fortsatz 196 nach unten ab, der in eine Öffnung 198 der Führungsschiene 32 eingreift, welche mittels der beiden Schrauben 34 auf dem Maschinentisch 12 befestigt ist. Der Fortsatz 196 hat eine Bohrung 200, durch die ein Gewindebolzen 202 greift, dessen Gewindeende 204 in eine Gewindebohrung 206 der Führungsschiene 32 eingeschraubt ist. Das gegenüberliegende Ende des Gewindebolzens 202 ist durch eine Bohrung 208 mit Hilfe eines Schraubendrehers 210 von außen erreichbar (vgl. Figur 26). Nach der Montage kann die Bohrung 208 durch einen Staubschutzstopfen abgeschlossen werden.

Um die Gewindespindel 76 von außen manuell verdrehen zu können, beispielsweise dann, wenn bei einem Defekt des Motors 194 der Gewindebolzen 202 nicht mehr in fluchtende Stellung mit der Bohrung 208 gebracht werden kann, ist in die Vorderkante 160 der Seitenwand 20 der Schutzhaube 10 eine Bohrung 208' eingearbeitet, die ebenfalls von einem Staubschutzstopfen abgeschlossen werden kann. Nach Herausnahme des Staubschutzstopfens kann, wie Figur 25 zeigt, mittels eines Schraubendrehers 210 die Gewindespindel 76 an ihrem zur Bohrung 208' weisenden Kopf erfaßt und manuell gedreht werden, bis die fluchtende Stellung zwischen Gewindebolzen 202 und Bohrung 208 in der Seitenwand 20 hergestellt ist, so daß dann der Schraubendreher 210 durch die Bohrung 208 hindurch den Gewindebolzen 202 erfassen kann, womit die Demontage möglich wird.

Die Figuren 21 und 22 lassen erkennen, daß sowohl an der trapezförmigen Innenwand 184 als auch an der rechteckigen Innenwand 186, die beide aus Blech bestehen, eine Leiste 212 mit Hilfe von Schrauben 214 befestigt ist. Der Abstand zwischen den beiden Leisten 212 entspricht der Breite der Führungsschiene 32, wobei dieser Abstand so eingestellt werden kann, daß eine spielfreie Gleitführung auf der Führungsschiene 32 gewährleistet ist. Zur Spieleinstellung dienen nicht weiter dargestellte Stützschrauben, die in Gewindebohrungen 216 der jeweiligen Leiste 212 von innen her eingeschraubt und verstellbar sind und durch Bohrungen 236 der zugeordneten Innenwand 184 bzw. 186 hindurchlaufen, so daß sich ihre Enden an den Innenflächen des Hohlraumes 180 der Seitenwand 20 abstützen.

Anstelle der im ersten Ausführungsbeispiel erläuterten Klemmschrauben 44 zur Fixierung der Horizontalposition der beiden Seitenwände 20 der Schutzhaube 10 an den Führungsschienen 32 dient beim zweiten Ausführungsbeispiel eine vertikale Gewindespindel 44', die von einem weiteren Elektromotor 218 angetrieben wird. An diesem ist, wie Figur 22 zeigt, über einen Ring 220 mit Axialschrauben 222 ein Reiter 224 befestigt, der die Querschnittsform eines kopfstehenden U hat, dessen vertikale Schenkel 226 sich auf der Oberseite der beiden Leisten 212 abstützen. Die vertikale Spindel 44' greift mit ihrem Gewindeende in eine Gewindebohrung 228 der Stellmutter 78 ein.

An der trapezförmigen Innenwand 184 ist, wie die Figuren 20 bis 22 zeigen, eine elektronische Schaltplatte 230 angebracht, die zur Ansteuerung der Motoren 194 und 218 dient. Diese sind über elektrische Kontakelemente 232 miteinander und mit der Tastatur 176 verbunden, um eine synchrone Betätigung zu gewährleisten. Die Kontaktelemente 232 sind sowohl in den Seitenwänden 20 der Schutzhaube 10 als auch in den diesen gegenüberliegenden Seitenschenkeln 56 der Halteorgane 52 vorgesehen.

Wenn die beiden Motoren 194 die gewünschte Horizontalverstellung der Schutzhaube 10 durchgeführt haben, wird der Motor 218 angesteuert, dessen vertikale Spindel 44' sich in die Gewindebohrung 228 einschraubt und dabei den Reiter relativ zu der Stellmutter 78 nach unten drückt, so daß sich seine beiden Schenkel 226 auf den Leisten 212 abstützen. Die Schutzhaube 10 ist damit in ihrer eingestellten Position blockiert. Die Entriegelung erfolgt durch eine umgekehrte Drehung der Spindel 44'.

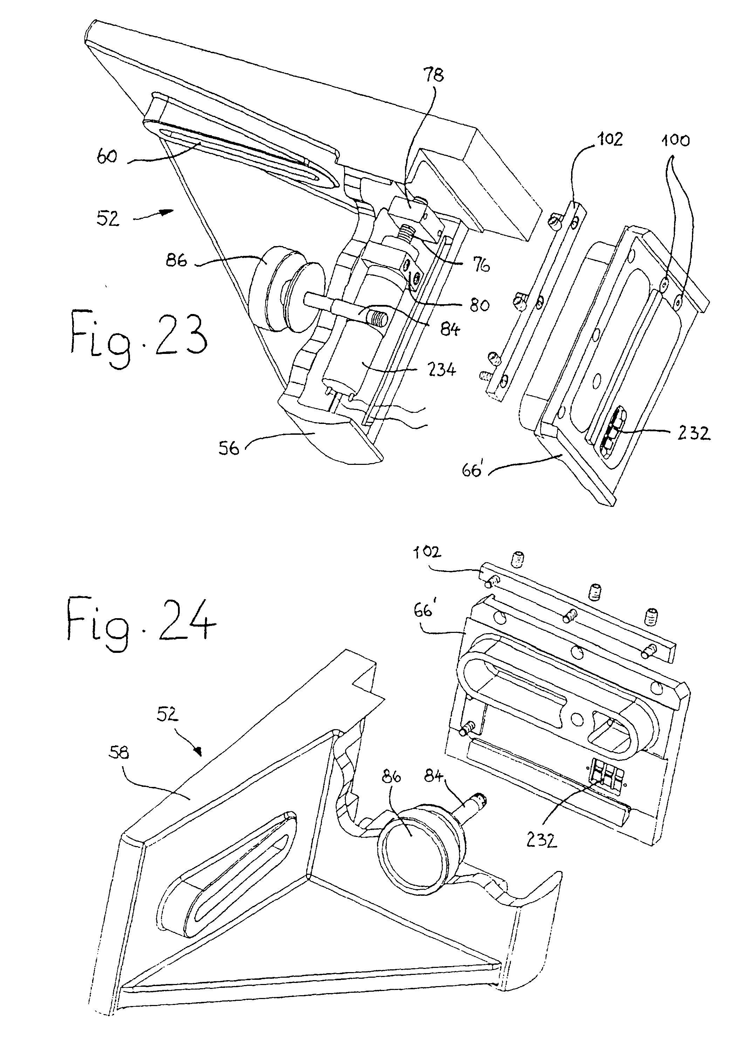

Die Figuren 23 und 24 zeigen, daß bei diesem Ausführungsbeispiel auch die Horizontalverstellung des rechten Halteorgans 52 relativ zur Schutzhaube 10 mit Hilfe eines Elektromotors 234 durchgeführt wird, der die Aufgabe der in Figur 16 gezeigten Gewindespindel 76 übernimmt. Der Motor 234 ist in den als kastenförmiges Gehäuse ausgebildeten Seitenschenkel 56 des rechten Halteorgans 52 eingebaut und treibt die Gewindespindel 76 an, auf der die Stellmutter 78 sitzt. Da diese mit Hilfe der Schrauben 100 an der beweglichen Längswand 66' befestigt ist, wird durch Ansteuerung des Motors 234 eine Horizontalverstellung des rechten Halteorgans 52 relativ zur Schutzhaube 10 erreicht. Auch in diesem Fall kann der Motor 234 über die Tastatur 176 und eine der Schaltplatten 230 angesteuert werden.

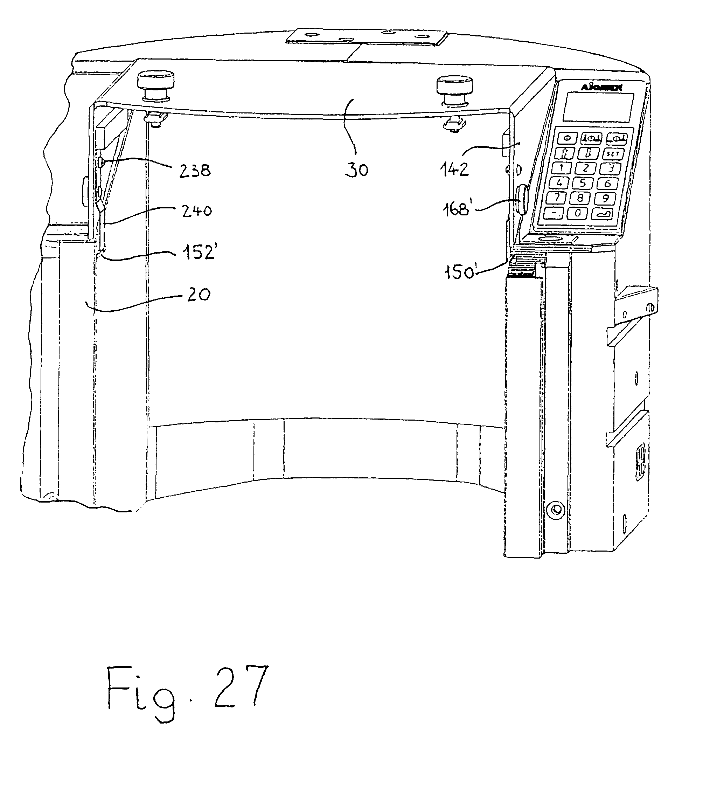

Figur 27 zeigt eine Variante der Figur 12 zur Verriegelung des Klappdeckels 30 in seiner geschlossenen Stellung. Hier ist an den beiden starren Seitenwänden 142 mittels einer Schraube 238 eine Blattfeder 240 befestigt, die an ihrem freien Ende einen Vorsprung 150' bildet, der beim Schließen des Klappdeckels 30 in eine Aussparung 152' der Seitenwand 20 einschnappt. Zum Öffnen werden die beiden an den Blattfedern 240 befestigten Köpfe 168' von außen nach innen gedrückt, so daß die Vorsprünge 150' außer Eingriff mit den Aussparungen 152' kommen.

In Figur 18 ist schließlich angedeutet, daß der zur Verfügung stehende Raum in dem Seitenschenkel 56 des linken Halteorgans 52 genutzt wird, um dort die Anlaufleiste 176 unterzubringen, wenn sie an der Schutzhaube 10 nicht benötigt wird.

## Patentansprüche

1. Schutzhaube (10) für Holzfräsmaschinen zur Abdeckung einer aus einem waagrechten Maschinentisch (12) vertikal herausragenden, ein Fräswerkzeug tragenden Spindel (16), bestehend aus zwei durch einen Deckel (26) und eine Rückwand (22) miteinander verbundenen Seitenwänden (20) und einem vorderen Schutzschild (130), wobei die Schutzhaube (10) Mittel zu ihrer verstellbaren Fixierung am Maschinentisch (12), Einrichtungen zum Befestigen von Arbeits- und Führungsorganen sowie in ihrem oberen Bereich eine Anschlußöffnung (126) für eine Absaugeinrichtung aufweist, **dadurch gekennzeichnet, daß** an jeder der beiden Seitenwände (20) ein Halteorgan (52) für die abnehmbare Befestigung einer Anschlagplatte (54) angebracht ist, das aus einem an der Seitenwand (20) lösbar befestigten Seitenschenkel (56) und einem rechtwinklig dazu ausgerichteten, die Anschlagplatte (54) tragenden Vorderschenkel (58) besteht.

2. Schutzhaube nach Anspruch 1, **dadurch gekennzeichnet, daß** der Vorderschenkel (58) einen waagrechten Schlitz (60) für die horizontal verstellbare Fixierung der Anschlagplatte (54) aufweist.

3. Schutzhaube nach Anspruch 1 oder 2, **dadurch gekennzeichnet, daß** ein Seitenschenkel (56) relativ zu der Seitenwand (20) der Schutzhaube (10) horizontal verstellbar ist, deren beide Seitenwände (20) an parallelen Führungsschienen (32) horizontal verschiebbar sind, welche auf dem Maschinentisch (12) befestigt sind.

4. Schutzhaube nach Anspruch 3, **dadurch gekennzeichnet, daß** jede der beiden Seitenwände (20) der Schutzhaube (10) über ein Klemmorgan (44,44') an der Führungsschiene (32) fixierbar ist.

5. Schutzhaube nach Anspruch 4, **dadurch gekennzeichnet, daß** das Klemmorgan eine vertikal ausgerichtete Klemmschraube (44) ist.

6. Schutzhaube nach Anspruch 4, **dadurch gekennzeichnet, daß** das Klemmorgan eine von einem Motor (218) angetriebene, vertikale Spindel (44') ist.

7. Schutzhaube nach einem der Ansprüche 3 bis 6, **dadurch gekennzeichnet, daß** zur horizontalen Verstellung der Schutzhaube (10) und/oder der Halteorgane (52) ein Stellmechanismus vorgesehen ist, der in den Seitenschenkeln (56) der Halteorgane (52) oder in den Seitenwänden (20) der Schutzhaube (10) untergebracht ist.

8. Schutzhaube nach Anspruch 7, **dadurch gekennzeichnet, daß** jeder Stellmechanismus eine Gewindespindel (76) aufweist, die eine Stellmutter (78) trägt und parallel zu der zugehörigen Seitenwand (20) bzw. zu dem zugehörigen Seitenschenkel (56) verläuft.

9. Schutzhaube nach Anpruch 7 oder 8, **dadurch gekennzeichnet, daß** jeder Seitenschenkel (56) aus einem kastenförmigen Gehäuse mit zwei parallelen Längswänden (66) besteht, in welchem der Stellmechanismus angeordnet ist, dessen Gewindespindel (76) über ein Winkelgetriebe (68) mit einer Einstellspindel (74) verbunden ist.

10. Schutzhaube nach Anspruch 9, **dadurch gekennzeichnet, daß** die Einstellspindel (74) im Bereich des Vorderschenkels (58) des Halteorgans (52) angeordnet ist

11. Schutzhaube nach Anspruch 9 oder 10, **dadurch gekennzeichnet, daß** zur Horizontalverstellung der Schutzhaube (10) das kastenförmige Gehäuse einer der beiden Seitenschenkel (56) mittels einer Durchsteckschraube (84) an der zugeordneten Seitenwand (20) der Schutzhaube (10) befestigt ist und daß von der Stellmutter (78) ein Dorn (94) durch eine Öffnung (96) in der gegenüberliegenden Seitenwand (20) der Schutzhaube (10) in eine Bohrung (98) der zugeordneten Führungsschiene (32) eingreift.

12. Schutzhaube nach Anspruch 7 oder 8, **dadurch gekennzeichnet, daß** in jede der beiden Seitenwände (20) der Schutzhaube (10) ein Stellmechanismus eingesetzt ist, dessen Gewindespindel (76) von einem vorzugsweise elektrisch betriebenen Motor (194) antreibbar ist und dessen Stellmutter (78) in festem Eingriff mit der zugehörigen Führungsschiene (32) ist.

13. Schutzhaube nach Anspruch 12, **dadurch gekennzeichnet, daß** der Motor (194) über einen Riementrieb (192) mit der Gewindespindel (76) verbunden ist.

14. Schutzhaube nach Anspruch 12 oder 13, **dadurch gekennzeichnet, daß** jeder Stellmechanismus aus einer in die Seitenwand (20) einsetzbaren Einheit (182) mit zwei Innenwänden (184,186) besteht, an denen zur Gleitführung auf der Führungsschiene (32) zwei parallel gegenüberliegende Leisten (212) angebracht sind, deren gegenseitiger Abstand einstellbar ist.

15. Schutzhaube nach Anspruch 14, **dadurch gekennzeichnet, daß** an einer der beiden Innenwände (184) der Stellmechanismus mit Motor (194) und elektronischer Schaltplatte (230) befestigt sind.

16. Schutzhaube nach einem der Ansprüche 12 bis 15, **dadurch gekennzeichnet, daß** ein von der Stellmutter (78) nach unten abstehender Fortsatz (196) in eine Öffnung (198) der Führungsschiene (32) eingreift, in welcher er mittels eines von außen zugänglichen Gewindebolzens (202) befestigt ist.

17. Schutzhaube nach einem der Ansprüche 12 bis 16, **dadurch gekennzeichnet, daß** die Gewindespindel (76) von außen manuell verdrehbar ist und hierzu einen Kopf für den Eingriff eines Werkzeugs (210) hat.

18. Schutzhaube nach Anspruch 6 und einem der Ansprüche 14 bis 17, **dadurch gekennzeichnet, daß** die von dem Motor (218) angetriebene, vertikale Spindel (44') mit ihrem unteren Gewindeende in eine Gewindebohrung (228) der Stellmutter (78) eingreift, auf die ein am Motor (218) befestigter Reiter (224) aufgesetzt ist, der die Querschnittsform eines kopfstehenden U hat, dessen vertikale Schenkel (226) sich auf der Oberseite der beiden Leisten (212) abstützen.

19. Schutzhaube nach Anspruch 8, **dadurch gekennzeichnet, daß** zur Horizontalverstellung eines der beiden Halteorgane (52), dessen Seitenschenkel (56) als kastenförmiges Gehäuse ausgebildet ist, die beiden Längswände (66) des Gehäuses relativ zueinander verschiebbar sind, wobei eine Längswand (66') an der zugeordneten Seitenwand (20) der Schutzhaube (10) und an der Stellmutter (78) befestigt ist.

20. Schutzhaube nach Anspruch 19, **dadurch gekennzeichnet, daß** die an der Schutzhaube (10) mittels einer Durchsteckschraube (84) befestigte Längswand (66') an einer im kastenförmigen Gehäuse angebrachten Führungsleiste (102) verschiebbar gelagert ist.

21. Schutzhaube nach Anspruch 19 oder 20, **dadurch gekennzeichnet, daß** die Gewindespindel (76) über eine Einstellspindel (74) manuell drehbar ist.

22. Schutzhaube nach Anspruch 19 oder 20, **dadurch gekennzeichnet, daß** die Gewindespindel (76) mit einem Antriebsmotor (234) verbunden ist.

23. Schutzhaube nach einem der Ansprüche 12 bis 22, **dadurch gekennzeichnet, daß** die nach außen weisenden Längswände (66) der Seitenschenkel (56) der Halteorgane (52) und die gegenüberliegenden Seitenwände (20) der Schutzhaube (10) elektrische Kontaktelemente (232) aufweisen.

24. Schutzhaube nach Anspruch 23, **dadurch gekennzeichnet, daß** an der Schutzhaube (10) eine Tastatur (176) zur Eingabe der Steuerungswerte für die elektrisch betriebenen Motoren (194,218,234) angebracht ist.

25. Schutzhaube nach einem der Ansprüche 9 bis 11, **dadurch gekennzeichnet, daß** wenigstens einer Einstellspindel (74) eine Maßskala mit optischer Anzeige (112) zugeordnet ist.

26. Schutzhaube nach einem der vorhergehenden Ansprüche, **dadurch gekennzeichnet, daß** der Deckel (26) aus einer mit der Rückwand (22) verbundenen, festen Abstützfläche (24) besteht, an der über ein Scharnier (28) ein Klappdeckel (30) angelenkt ist, der eine ausziehbare Verlängerungsplatte (128) mit einem nach unten abstehenden Rand trägt, an dessen Vorderseite das Schutzschild (130) höhenverstellbar angebracht ist.

27. Schutzhaube nach Anspruch 26, **dadurch gekennzeichnet, daß** die Vorderseite des Randes in zwei Seitenplatten (140) übergeht, die zwischen zwei vom Klappdeckel (30) abstehenden Seitenwänden (142) geführt sind.

28. Schutzhaube nach Anspruch 27, **dadurch gekennzeichnet, daß** die beiden Seitenwände (142) des Klappdeckels (30) eine zu den Scharnieren (28) konvergierende Dreiecksform haben und daß die sich anschließenden Seitenwände (20) der Schutzhaube (10) entsprechend abgeschrägt sind.

29. Schutzhaube nach einem der Ansprüche 26 bis 28, **dadurch gekennzeichnet, daß** der Klappdeckel (30) in der nach oben geöffneten Stellung über ein Rastelement (146) fixierbar ist.

30. Schutzhaube nach einem der Ansprüche 26 bis 29, **dadurch gekennzeichnet, daß** der Klappdeckel (30) in der waagrechten, geschlossenen Stellung mittels eines Vorsprungs (150) in eine Hinterschneidung (152) der Seitenwand (20) der Schutzhaube (10) elastisch einschnappt.

31. Schutzhaube nach einem der Ansprüche 26 bis 29, **dadurch gekennzeichnet, daß** der Klappdeckel (30) in der waagrechten, geschlossenen Stellung mittels eines Federelementes (240) in eine Aussparung (152') der Seitenwand (20) der Schutzhaube (10) elastisch einschnappt.

32. Schutzhaube nach einem der Ansprüche 26 bis 31, **dadurch gekennzeichnet, daß** die Abstützfläche (24) Mittel zur Befestigung eines Lagerbocks (114) für den Schwenkarm (116) einer Schutzund Druckvorrichtung (118) aufweist.

33. Schutzhaube nach einem der vorhergehenden Ansprüchen, **dadurch gekennzeichnet, daß** die Seitenwände (20) vertikale Haltebohrungen (154) zur Aufnahme von Tragelementen (156) für Druckoder Führungsorgane aufweisen.

34. Schutzhaube nach einem der vorhergehenden Ansprüchen, **dadurch gekennzeichnet, daß** in einen seitlich nach außen weisenden Bereich der Vorderkante (160) wenigstens einer Seitenwand (20) eine Vertikalnut (162) zur höhenverstellbaren Aufnahme eines Hilfswerkzeugs, insbesondere einer Anlaufleiste (166), eingearbeitet ist.

35. Schutzhaube nach einem der vorhergehenden Ansprüche, **dadurch gekennzeichnet, daß** die Seitenwände (20) horizontale Gewindebohrungen (170) zur einstellbaren Befestigung von Staubschutzvorhängen (172) aufweist.

36. Schutzhaube nach Anspruch 35, **dadurch gekennzeichnet, daß** die beidseitig angebrachten Staubschutzvorhänge (172) schräg aufeinander zulaufend befestigt sind.

## Claims

1. Protective hood (10) for wood-milling machines, for covering a spindle (16) which projects vertically out of a horizontal machine table (12) and bears a milling tool, comprising two side walls (20), which are connected to one another by a cover (26) and a rear wall (22), and a front protective shield (130), the protective hood (10) having means for fixing it adjustably to the machine table (12), devices for attaching working and guide members and, in its upper region, a connection opening (126) for an exhaust device, **characterized in that** a holding member (52) for the removable attachment of a stop plate (54) is arranged on each of the two side walls (20), which holding member comprises a side limb (56), which is releaseably attached to the side wall (20), and a front limb (58), which is at right angle to the side limb and bears the stop plate (54).

2. Protective hood as claimed in claim 1, wherein the front limb (58) has a horizontal slot (60) for the horizontally adjustable fixing of the stop plate (54).

3. Protective hood as claimed in claim 1 or 2, wherein one side limb (56) is horizontally adjustable relative to the side wall (20) of the protective hood (10), the two side walls (20) of which are horizontally displaceable on parallel guide rails (32) which are attached to the machine table (12).

4. Protective hood as claimed in claim 3, wherein each of the two side walls (20) of the protective hood (10) can be fixed to the guide rail (32) by means of a clamping member (44, 44').

5. Protective hood as claimed in claim 4, wherein the clamping member is a vertically oriented clamping screw (44)

6. Protective hood as claimed in claim 4, wherein the clamping member is a vertical spindle (44') which is driven by a motor (218).

7. Protective hood as claimed in anyone of claims 3 to 6, wherein an adjustment mechanism, which is accommodated in the side limbs (56) of the holding members (52) or in the side walls (20) of the protective hood (10), is provided for the horizontal adjustment of the protective hood (10) and/or the holding members (52).

8. Protective hood as claimed in claim 7, wherein each adjustment mechanism has a threaded spindle (76) which bears an adjustment nut (78) and runs parallel to the associated side wall (20) or to the associated side limb (56) respectively.

9. Protective hood as claimed in claim 7 or 8, wherein each side limb (56) comprises a box-like housing with two parallel longitudinal walls (66), in which housing the adjustment mechanism is arranged, the threaded spindle (76) of which is connected to an adjustment spindle (74) via an angular gear (68).

10. Protective hood as claimed in claim 9, wherein the adjustment spindle (74) is arranged in the region of the front limb (58) of the holding member (52).

11. Protective hood as claimed in claim 9 or 10, wherein for horizontal adjustment of the protective hood (10), the box-like housing of one of the two side limbs (56) is attached to the associated side wall (20) of the protective hood (10) by means of a through-bolt (84), and wherein a mandrel (94) of the adjustment nut (78) engages through an opening (96) in the opposite side wall (20) of the protective hood (10) into a bore (98) in the associated guide rail (32).

12. Protective hood as claimed in claim 7 or 8, wherein an adjustment mechanism is fitted into each of the two side walls (20) of the protective hood (10), the threaded spindle (76) of which mechanism can be driven by a preferably electrically operated motor (194) and the adjustment nut (78) of which mechanism is in fixed engagement with the associated guide rail (32).

13. Protective hood as claimed in claim 12, wherein the motor (194) is connected to the threaded spindle (76) via a belt drive (192).

14. Protective hood as claimed in claim 12 or 13, wherein each adjustment mechanism comprises a unit (182) which can be inserted into the side wall (20) and has two inner walls (184, 186) on which, for sliding guidance on the guide rail (32), two strips (212) are arranged, which lie parallel opposite one another and the distance between which is adjustable.

15. Protective hood as claimed in claim 14, wherein the adjustment mechanism with motor (194) and electronic circuit board (230) are attached to one of the two inner walls (184).

16. Protective hood as claimed in one of claims 12 to 15, wherein an extension (196), which projects downwards from the adjustment nut (78), engages in an opening (198) in the guide rail (32), in which it is attached by means of a threaded bolt (202) which is accessible from the outside.

17. Protective hood as claimed in one of claims 12 to 16, wherein the threaded spindle (76) can be turned manually from the outside and, for this purpose, has a head to be engaged by a tool (210).

18. Protective hood as claimed in claim 6 and one of claims 14 to 17, wherein the lower threaded end of the vertical spindle (44'), which is driven by the motor (218), engages in a threaded bore (228) in the adjustment nut (78), onto which a bridge (224) is fitted, which bridge is attached to the motor (218) and the cross-section of which bridge is in the form of an upside-down U, the vertical limbs (226) of which are supported on the top side of the two strips (212).

19. Protective hood as claimed in claim 8, wherein for horizontal adjustment of one of the two holding members (52), the side limb (56) of which is designed as a box-like housing, the two longitudinal walls (66) of the housing are displaceable relative to one another, one longitudinal wall (66') being attached to the associated side wall (20) of the protective hood (10) and to the adjustment nut (78).

20. Protective hood as claimed in claim 19, wherein the longitudinal wall (66') which is attached to the protective hood (10) by means of a through-bolt (84) is mounted displaceably on a guide strip (102) arranged in the box-like housing.

21. Protective hood as claimed in claim 19 or 20, wherein the threaded spindle (76) can be turned manually via an adjustment spindle (74).

22. Protective hood as claimed in claim 19 or 20, wherein the threaded spindle (76) is connected to a drive motor (234).

23. Protective hood as claimed in one of claims 12 to 22, wherein the outwardly facing longitudinal walls (66) of the side limbs (56) of the holding members (52) and the opposite side walls (20) of the protective hood (10) have electrical contact elements (232).

24. Protective hood as claimed in claim 23, wherein a keyboard (176) for inputting the control parameters for the electrically operated motors (194, 218, 234) is arranged on the protective hood (10).

25. Protective hood as claimed in anyone of claims 9 to 11, wherein a measurement scale with a visual display (112) is assigned to at least one adjustment spindle (74).

26. Protective hood as claimed in one of the preceding claims, wherein the cover (26) comprises a fixed support surface (24) which is connected to the rear wall (22) and on which a cover flap (30) is articulatedly mounted via a hinge (28), which flap bears a pull-out extension plate (128) with a downwardly projecting rim, on the front side of which the protective shield (130) is arranged in a vertically adjustable manner.

27. Protective hood as claimed in claim 26, wherein the front side of the rim merges into two side plates (140) which are guided between two side walls (142) which project from the cover flap (30).

28. Protective hood as claimed in claim 27, wherein the two side walls (142) of the cover flap (30) are in the shape of a triangle converging toward the hinges (28), and wherein the adjoining side walls (20) of the protective hood (10) are beveled accordingly.

29. Protective hood as claimed in one of claims 26 to 28, wherein the cover flap (30) can be fixed in the upwardly open position by means of a latching element (146).

30. Protective hood as claimed in one of claims 26 to 29, wherein the cover flap (30), in the horizontal, closed position, latches elastically into an undercut (152) in the side wall (20) of the protective hood (10) by means of a protrusion (150).

31. Protective hood as claimed in anyone of claims 26 to 29, wherein the cover flap (30), in the horizontal, closed position, latches elastically into a cutout (152') in the side wall (20) of the protective hood (10) by means of a spring element (240).

32. Protective hood as claimed in one of claims 26 to 31, wherein the support surface (24) has means for attaching a bearing block (114) for the pivot arm (116) of a protection and pressure device (118).

33. Protective hood as claimed in one of the preceding claims, wherein the side walls (20) have vertical holding bores (154) for receiving bearing elements (156) for pressure or guide members.

34. Protective hood as claimed in one of the preceding claims, wherein a vertical groove (162) for receiving an auxiliary tool, in particular a starting strip (166), in a vertically adjustable manner is machined into a region of the front edge (160) of at least one side wall (20) which faces laterally outwards.

35. Protective hood as claimed in one of the preceding claims, wherein the side walls (20) have horizontal threaded bores (170) for the adjustable attachment of dust-protective curtains (172).

36. Protective hood as claimed in claim 35, wherein the dust-protective curtains (172), which are arranged on both sides, are attached in such a way that they converge toward one another.

## Revendications

1. Capot de protection (10) pour fraiseuses à bois, destiné à recouvrir une broche (16) portant un outil de fraisage et dépassant verticalement d'un banc machine horizontal (12), et composé de deux parois latérales (20) reliées par un couvercle (26) et une paroi arrière (22) et d'un bouclier avant (130), le capot de protection (10) présentant en l'occurrence des moyens qui permettent sa fixation réglable sur le banc machine (12), des dispositifs pour fixer des organes de travail et de guidage, ainsi qu'une ouverture de raccordement (126) ménagée dans sa partie supérieure et destinée à recevoir un dispositif d'aspiration, **caractérisé en ce qu'**un organe de support (52) pour la fixation amovible d'une plaque de butée (54) est monté sur chacune des deux parois latérales (20), cet organe de support étant en l'occurrence constitué d'une aile latérale (56) fixée de façon détachable à la paroi latérale (20) et d'une aile avant (58) portant la plaque de butée (54) et perpendiculaire à l'aile latérale.

2. Capot de protection selon la revendication 1, **caractérisé en ce que** l'aile avant (58) présente une fente horizontale (60) pour la fixation réglable horizontalement de la plaque de butée (54).

3. Capot de protection selon la revendication 1 ou 2, **caractérisé en ce qu'**une aile latérale (56) est réglable horizontalement par rapport à la paroi latérale (20) du capot de protection (10) dont les deux parois latérales (20) sont déplaçables horizontalement sur des rails de guidage parallèles (32) fixés sur le banc machine (12).

4. Capot de protection selon la revendication 3, **caractérisé en ce que** chacune des deux parois latérales (20) du capot de protection (10) est fixable au rail de guidage (32) par l'intermédiaire d'un organe de serrage (44, 44').

5. Capot de protection selon la revendication 4, **caractérisé en ce que** l'organe de serrage est une vis de serrage (44) orientée verticalement.

6. Capot de protection selon la revendication 4, **caractérisé en ce que** l'organe de serrage est une broche verticale (44') entraînée par un moteur (218).

7. Capot de protection selon l'une des revendications 3 à 6, **caractérisé en ce qu'**un mécanisme de réglage est prévu pour le réglage horizontal du capot de protection (10) et/ou des organes de support (52), ledit mécanisme de réglage étant en l'occurrence logé dans les ailes latérales (56) des organes de support (52) ou dans les parois latérales (20) du capot de protection (10).

8. Capot de protection selon la revendication 7, **caractérisé en ce que** chaque mécanisme de réglage présente une broche filetée (76) qui porte un écrou de réglage (78) et qui est parallèle à la paroi latérale (20) correspondante ou à l'aile latérale (56) correspondante.

9. Capot de protection selon la revendication 7 ou 8, **caractérisé en ce que** chaque aile latérale (56) est constituée d'un boîtier en caisson présentant deux parois longitudinales parallèles (66), et dans lequel est monté le mécanisme de réglage, dont la broche filetée (76) est reliée à une tige de réglage (74) par l'intermédiaire d'un engrenage angulaire (68).

10. Capot de protection selon la revendication 9, **caractérisé en ce que** la tige de réglage (74) est disposée dans la zone de l'aile avant (58) de l'organe de support (52).

11. Capot de protection selon la revendication 9 ou 10, **caractérisé en ce que**, pour le réglage horizontal du capot de protection (10), le boîtier en caisson de l'une des deux ailes latérales (56) est fixé à la paroi latérale (20) correspondante du capot de protection (10) à l'aide d'une vis traversante (84), et **en ce que** partant de l'écrou de réglage (78), un ergot (94) traverse une ouverture (96) ménagée dans la paroi latérale (20) opposée du capot de protection (10) pour s'engrener dans un trou (98) du rail de guidage (32) correspondant.

12. Capot de protection selon la revendication 7 ou 8, **caractérisé en ce que** dans chacune des deux parois latérales (20) du capot de protection (10) est logé un mécanisme de réglage, dont la broche filetée (76) est entraînable par un moteur (194), de préférence électrique, et dont l'écrou de réglage (78) est en prise de façon fixe avec le rail de guidage (32) correspondant.

13. Capot de protection selon la revendication 12, **caractérisé en ce que** le moteur (194) est relié à la broche filetée (76) par l'intermédiaire d'un entraînement par courroie (192).

14. Capot de protection selon la revendication 12 ou 13, **caractérisé en ce que** chaque mécanisme de réglage est composé d'une unité (182) insérable dans la paroi latérale (20) et possédant deux parois intérieures (184, 186) sur lesquelles sont montées deux barres (212) parallèlement opposées et à écartement réciproque réglable, qui permettent le guidage à glissement sur le rail de guidage (32).

15. Capot de protection selon la revendication 14, **caractérisé en ce que** le mécanisme de réglage, avec le moteur (194) et le circuit imprimé électronique (230), est fixé à l'une des deux parois intérieures (184).

16. Capot de protection selon l'une des revendications 12 à 15, **caractérisé en ce qu'**un prolongement (196) partant de l'écrou de réglage (78) vers le bas s'engrène dans une ouverture (198) du rail de guidage (32), dans lequel il est fixé au moyen d'un boulon fileté (202) accessible de l'extérieur.

17. Capot de protection selon l'une des revendications 12 à 16, **caractérisé en ce que** la broche filetée (76) peut être tournée manuellement de l'extérieur et qu'elle possède à cet effet une tête qui peut recevoir un outil (210).

18. Capot de protection selon la revendication 6 et l'une des revendications 14 à 17, **caractérisé en ce que** la broche verticale (44') entraînée par le moteur (218) s'engrène avec son extrémité filetée inférieure dans un trou taraudé (228) de l'écrou de réglage (78), sur lequel est posé un cavalier (224) fixé au moteur (218), et présentant un profil en U renversé dont les ailes verticales (226) s'appuient sur la face supérieure des deux barres (212).

19. Capot de protection selon la revendication 8, **caractérisé en ce que**, pour le réglage horizontal de l'un des deux organes de support (52), dont l'aile latérale (56) est conçue comme un boîtier en caisson, les deux parois longitudinales (66) du boîtier sont déplaçables l'une par rapport à l'autre, une paroi longitudinale (66') étant pour cela fixée à la paroi latérale (20) correspondante du capot de protection (10) et à l'écrou de réglage (78).

20. Capot de protection selon la revendication 19, **caractérisé en ce que** la paroi longitudinale (66') fixée au capot de protection (10) au moyen d'une vis traversante (84) peut coulisser sur une glissière de guidage (102) montée dans le boîtier en caisson.

21. Capot de protection selon la revendication 19 ou 20, **caractérisé en ce que** la broche filetée (76) peut être tournée manuellement par l'intermédiaire d'une tige de réglage (74).

22. Capot de protection selon la revendication 19 ou 20, **caractérisé en ce que** la broche filetée (76) est reliée à un moteur d'entraînement (234).

23. Capot de protection selon l'une des revendications 12 à 22, **caractérisé en ce que** les parois longitudinales (66) de l'aile latérale (56) des organes de support (52) dirigées vers l'extérieur et les parois latérales (20) opposées du capot de protection (10) présentent des éléments de contact électriques (232).

24. Capot de protection selon la revendication 23, **caractérisé en ce que** le capot de protection (10) présente un clavier (176) qui permet d'entrer les valeurs de commande pour les moteurs électriques en fonctionnement (194, 218, 234).

25. Capot de protection selon l'une des revendications 9 à 11, **caractérisé en ce qu'**une échelle graduée à affichage optique (112) est affectée à au moins une tige de réglage (74).

26. Capot de protection selon l'une des revendications précédentes, **caractérisé en ce que** le couvercle (26) est constitué d'une face d'appui (24) fixe qui est reliée à la paroi arrière (22) et sur laquelle est articulé, par l'intermédiaire d'une charnière (28), un couvercle rabattable (30) portant une plaque de rallonge extensible (128) coulissante munie d'un rebord partant vers le bas, et sur le devant duquel le bouclier (130) est monté de façon réglable en hauteur.

27. Capot de protection selon la revendication 26, **caractérisé en ce que** le devant du rebord se continue par deux plaques latérales (140) guidées entre deux parois latérales (142) qui partent du couvercle rabattable (30).

28. Capot de protection selon la revendication 27, **caractérisé en ce que** les deux parois latérales (142) du couvercle rabattable (30) ont une forme triangulaire qui converge vers les charnières (28) et que les parois latérales (20) du capot de protection (10) qui s'y rattachent sont taillées en biseau de façon correspondante.

29. Capot de protection selon l'une des revendications 26 à 28, **caractérisé en ce que** le couvercle rabattable (30) est fixable dans la position ouverte vers le haut par l'intermédiaire d'un élément d'arrêt (146).

30. Capot de protection selon l'une des revendications 26 à 29, **caractérisé en ce que** le couvercle rabattable (30), lorsqu'il est dans la position fermée horizontale, s'encliquète élastiquement dans une contre-dépouille (152) de la paroi latérale (20) du capot de protection (10) au moyen d'une saillie (150).

31. Capot de protection selon l'une des revendications 26 à 29, **caractérisé en ce que** le couvercle rabattable (30), lorsqu'il est dans la position fermée horizontale, s'encliquète élastiquement dans une encoche (152') de la paroi latérale (20) du capot de protection (10) au moyen d'un élément-ressort (240).

32. Capot de protection selon l'une des revendications 26 à 31, **caractérisé en ce que** la face d'appui (24) présente des moyens destinés à la fixation d'un support (114) pour le bras orientable (116) d'un dispositif de protection et de pression (118).

33. Capot de protection selon l'une des revendications précédentes, **caractérisé en ce que** les parois latérales (20) présentent des trous de support verticaux (154) destinés à recevoir des éléments porteurs (156) pour des organes de pression ou de guidage.

34. Capot de protection selon l'une des revendications précédentes, **caractérisé en ce que** dans une zone dirigée latéralement vers l'extérieur du bord antérieur (160) d'au moins une paroi latérale (20) est ménagée une rainure verticale (162) qui sert au logement réglable en hauteur d'un outil auxiliaire, notamment d'une barre d'approche (166).

35. Capot de protection selon l'une des revendications précédentes, **caractérisé en ce que** les parois latérales (20) présentent des trous taraudés horizontaux (170) pour la fixation réglable de rideaux anti-poussière (172).

36. Capot de protection selon la revendication 35, **caractérisé en ce que** les rideaux anti-poussière (172) disposés des deux côtés sont fixés en se rapprochant obliquement l'un de l'autre.
